# EUROPÄISCHE PATENTSCHRIFT

(11) **EP 2 905 190 B1**
(45) Veröffentlichungstag und Bekanntmachung des Hinweises auf die Patenterteilung: **21.09.2016**
(21) Anmeldenummer: 15000121.2
(22) Anmeldetag: 17.01.2015
(51) Int. Cl.: B60T 13/68, B60T 15/04

(54) **Feststellbremsvorrichtung einer pneumatischen Bremsanlage**
Parking brake device of a pneumatic brake system
Dispositif de frein de stationnement d'une installation de freinage pneumatique

(30) Priorität: 28.01.2014 DE 102014001237
(43) Veröffentlichungstag der Anmeldung: 12.08.2015
(73) Patentinhaber: WABCO GmbH, 30453 Hannover (DE)
(72) Erfinder: Lichtenberg, Wolfgang, 30457 Hannover (DE)

(56) Entgegenhaltungen:
- EP-A2- 0 941 905
- EP-A2- 1 188 634
- DE-A1-102006 055 570
- FR-A1- 2 651 196

## Beschreibung

Die Erfindung betrifft eine Feststellbremsvorrichtung einer pneumatischen Bremsanlage eines als Zugfahrzeug ausgebildeten Nutzfahrzeugs mit den Merkmalen des Oberbegriffs des Patentanspruchs 1.

Übliche Bremsanlagen von Nutzfahrzeugen, wie sie beispielsweise aus der im Internet unter dem Link http://inform.wabco-auto.com/intl/scripts/download.php?from=/intl/de/informpm.php&lang=&keywords=&file=../../i ntl/pdf/815/00/57/8150200573-04.pdf abrufbaren WABCO-Druckschrift "Trainings-Unterlagen, Grundlehrgang Teil 4", Seite 2, bekannt sind, weisen neben den bei Druckluftbremsanlagen bei Nutzfahrzeugen üblichen Komponenten, wie Vorratsbehälter, Kompressoren, Lufttrocknern, Fußbremsventilen usw. auch eine Feststellbremsvorrichtung auf, welche bei konventionell aufgebauten Druckluftbremsanlagen eine als Feststellbremsvorrichtung ausgebildete Feststellbremsbetätigungseinrichtung aufweist. Hat das Nutzfahrzeug eine gewünschte Parkposition eingenommen, betätigt der Fahrer des Nutzfahrzeugs die Feststellbremsvorrichtung, wodurch wenigstens die Feststellbremszylinder einer Achse entlüftet werden, was bewirkt, dass die Bremsen wenigstens einer Achse dauerhaft festgelegt werden. Übliche Bremsanlagen weisen auch ein am Zugfahrzeug angeordnetes Anhängersteuerventil auf, durch welches Druckluft den ebenfalls am Zugfahrzeug angeordneten Kupplungsköpfen "Bremse" und "Vorrat" zugeführt wird. Über die Kupplungsköpfe des Zugfahrzeugs gelangt Druckluft zum am Zugfahrzeug angekoppelten Anhängerfahrzeug, welches über eine eigene Bremsanlage verfügt. Die in das Anhängerfahrzeug eingespeiste Druckluft bewirkt eine Bremsung des Anhängerfahrzeuges entsprechend dem Bremswunsch des Fahrers des Zugfahrzeuges.

In der Regel bewirkt eine Betätigung der Feststellbremsvorrichtung nicht nur eine Zuspannung der Feststellbremsen des Zugfahrzeugs, sondern auch über entsprechende Steuer- und Bremsleitungen des Anhängersteuerventils eine Zuspannung der Bremsen des Anhängerfahrzeuges, da im Normalfall bei Erreichen einer Parkposition nicht nur das Zugfahrzeug, sondern auch das Anhängerfahrzeug dauerhaft gebremst bleibt. Um nach Abkoppeln des Anhängerfahrzeugs vom Zugfahrzeug, beispielsweise beim Be- und Entladen des Anhängerfahrzeuges, dieses Anhängerfahrzeug rangieren zu können, ist in der Regel am Anhängerfahrzeug ein Löseventil angeordnet, durch welches manuell die Parkbremse gelöst werden kann. Dieses am Anhängerfahrzeug angeordnete Löseventil wird von der Firma WABCO unter der Teile-Nummer 963 006 001 0 seit Jahren vertrieben und ist in einer WABCO-Druckschrift beschrieben, welche im Internet unter folgendem Link abrufbar ist: http://inform.wabco-auto.com/intl/pdf/815/01/78/96300x.pdf

Bei Fahrzeugen, welche in nordischen Ländern, namentlich in Skandinavien, eingesetzt werden, ist die Situation anders. Dort sind Elemente der Bremsanlage so verschaltet, dass ein Betätigen der Feststellbremseinrichtung ausschließlich das Feststellen der Feststellbremse des Zugfahrzeugs bewirkt, während die Bremse des Anhängerfahrzeuges gelöst bleibt. Hintergrund dieser Maßnahme sind die in nordischen Ländern vorherrschenden klimatischen Bedingungen, aufgrund derer es in besonders kalten Jahreszeiten zum Einfrieren der Bremszuspannungen kommen kann, so dass sich dann unter Umständen die Bremsen des Anhängerfahrzeuges nicht mehr lösen lassen. Ein Problem hierbei ist, dass beim Be- und Entladen des Anhängerfahrzeuges im angekoppelten Zustand am Zugfahrzeug das Anhängerfahrzeug ungebremst ist, wodurch es beim Be- bzw. Entladen zum Rutschen kommen kann.

Für solche Fahrzeuge besteht ein Bedürfnis danach, in bestimmten Situationen das stillstehende, am Zugfahrzeug angekoppelte Anhängerfahrzeug individuell bremsen zu können, das heißt, im angekoppelten Zustand den Anhänger mit einer Dauerbremsfunktion zu versehen.

Das oben genannte Problem bzw. die oben genannte Aufgabe tritt besonders bei Bremsanlagen auf bzw. ist es bei bestimmten Bremsanlage ein besonderes Anliegen, die oben genannte Aufgabe zu erfüllen, bei welchen anstelle eines üblichen, mechanischpneumatischen Feststellbremsvorrichtungs ein sogenanntes "Air Processing Module" (APM) angeordnet ist. Ein solches APM, welches beispielsweise von der Firma KNORR-Bremse Systeme für Nutzfahrzeuge angeboten wird, besteht aus einem elektronisch geregelten und gesteuerten Luftaufbereitungsmodul, an welches ein elektronisch geregeltes Feststellbremsmodul angeflanscht ist. Derartige APM sind beispielsweise aus der DE 10 2004 051 309 A1, der DE 10 2005 026 343 A1, der DE 10 2006 055 570 A1, der DE 10 2006 055 569 A1, der EP 1 731 393 B1, der EP 1 731 394 B1 und der EP 1 731 395 B1 bekannt. Bei diesen Lösungen ist keine mechanisch-pneumatisches Feststellbremsvorrichtung vorhanden; der Fahrer initialisiert die Feststellbremsen wenigstens des Zugfahrzeugs durch Betätigen eines elektrischen Schalters.

Es ist daher Aufgabe der Erfindung, eine Bremsanlage der eingangs geschilderten Art dahingehend zu verbessern, die Feststellbremse des Anhängerfahrzeuges, welches am Zugfahrzeug angekoppelt ist, auf einfachste Art und Weise vom Zugfahrzeug aus zu betätigen.

Die Aufgabe wird mit einer Feststellbremsvorrichtung gelöst, welche die Merkmale des Patentanspruchs 1 aufweist.

Der Erfindung liegt die überraschende Erkenntnis zugrunde, dass sich die Aufgabe dadurch lösen lässt, dass zwischen der vom Anhängersteuerventil abgehenden, zum Kupplungskopf "Bremse" führenden Leitung eine Ventileinrichtung angeordnet ist, durch welche die zum Kupplungskopf "Bremse" führende Druckluftleitung mit der zum Kupplungskopf "Vorrat" führenden Leitung verbunden werden kann. Diese Ventileinrichtung ist am Zugfahrzeug angeordnet, so dass der mit dem Be- bzw. Entladen betraute Fahrer bequem Druckluft zum Anhängerfahrzeug und hierdurch Druckluft zu den Feststellbremsen des Anhängerfahrzeuges zugeführt werden kann.

Entsprechend zeichnet sich die Erfindung dadurch aus, dass zwischen dem am Zugfahrzeug angeordneten Anhängersteuerventil und den am Zugfahrzeug angeordneten Kupplungsköpfen eine am Zugfahrzeug befestigte Ventileinrichtung angeordnet ist, durch welche ein pneumatischer Anschluss des Brems-Kupplungskopfs entweder mit einem Bremsdruckanschluss des Anhängersteuerventils oder mit einem Vorratsdruckanschluss des Anhängersteuerventils und des Vorrats-Kupplungskopfs verbindbar ist.

Eine besonders einfache und ökonomisch günstige Lösung ergibt sich dadurch, dass als Ventileinrichtung eine solche verwendet wird, welche bislang ausschließlich für Anhängerfahrzeuge als Löseventil eingesetzt wurde. Während das Löseventil sonst dazu diente, die Bremse des Anhängerfahrzeuges zu lösen, wird sie nunmehr in umgekehrter Wirkweise eingesetzt, das heißt, durch das nunmehr als Feststellventil dienende Löseventil wird die Feststellbremse des Anhängerfahrzeuges betätigt. Ein Vorteil der Verwendung eines bekannten Löseventils, welches beispielsweise von der Firma WABCO unter der Teile-Nr. 963 006 001 0 oder von der Fa. Knorr-Bremse Systeme für Nutzfahrzeuge unter der Teile-Nr. AE4261 vertrieben werden, ergibt sich auch dadurch, dass das Ventil so ausgebildet ist, dass beim ersten Betätigen der Bremse nach Wiederstart des Zugfahrzeuges automatisch ein geringerer Druck von etwa 2,5 bar an die Anschlussleitung des Löseventils angelegt wird, wodurch der Betätigungskolben des Löseventils automatisch in seine Ausgangsstellung gelangt, was ein Lösen der Bremse des Anhängerfahrzeuges bewirkt. Dies ermöglicht eine besonders ergonomisch günstige Betriebsweise des Nutzfahrzeuges, denn der Fahrer muss zum Einlegen der Bremse des Anhängerfahrzeuges lediglich die Ventileinrichtung betätigen, muss dieses aber nicht durch gesonderte Handgriffe wieder in seine Ausgangsstellung bringen, da das System dies quasi selbsttätig übernimmt, was Fehlbedingungen ausschließt.

Die Erfindung lässt sich noch dadurch ergänzen, dass vorgesehen ist, dass die Ventileinrichtung als 2/3-Wegeventil ausgebildet ist, wobei in einer unteren Stellung der Ventileinrichtung eine Verbindung des Bremsdruckanschlusses des Anhängersteuerventils über einen Eingangsanschluss der Ventileinrichtung mit dem Bremsdruckanschluss des Brems-Kupplungskopfs besteht, und wobei in einer oberen Stellung der Ventileinrichtung eine Verbindung des Vorratsdruckanschlusses des Anhängersteuerventils und des Vorratsdruckanschlusses des Vorrats-Kupplungskopfs mit dem Bremsdruckanschluss des Brems-Kupplungskopfs besteht.

Alternativ kann vorgesehen sein, dass die Ventileinrichtung als 3/3-Wegeventil ausgebildet ist, wobei in einer unteren Stellung der Ventileinrichtung eine Verbindung des Bremsdruckanschlusses des Anhängersteuerventils über einen Eingangsanschluss der Ventileinrichtung mit dem Bremsdruckanschluss des Brems-Kupplungskopfs besteht, und wobei in einer oberen Stellung der Ventileinrichtung eine Verbindung des Vorratsdruckanschlusses des Anhängersteuerventils und des Vorratsdruckanschlusses des Vorrats-Kupplungskopfs mit dem Bremsdruckanschluss des Brems-Kupplungskopfs besteht, und wobei in einer mittleren Stellung zwischen unterer Stellung und der oberen Stellung der Ventileinrichtung sowohl der Bremsdruckanschluss des Brems-Kupplungskopfs, als auch der Vorratsdruckanschlusses des Vorrats-Kupplungskopfs abgesperrt sind.

In einer anderen praktischen Weiterbildung der Erfindung ist vorgesehen, dass die Ventileinrichtung ein Gehäuse aufweist, entlang dessen Längsachse ein Ventilkolben verschieblich angeordnet ist, welcher mit einem Betätigungsknopf verbunden ist.

Besonders praktisch ist eine Ergänzung der Erfindung, welche sich dadurch auszeichnet, dass die Ventileinrichtung mit ihrem Betätigungsknopf mittels eines Befestigungsflansches außen am Rahmen des Zugfahrzeugs befestigt ist.

In einer besonders bevorzugten Ausgestaltung der Erfindung ist vorgesehen, dass die Feststellbremsvorrichtung eine als Handbremsventil ausgebildete Feststellbremsbetätigungseinrichtung aufweist, welche über ein Rückschlagventil an einem Druckluftvorratsbehälter angeschlossen ist.

Alternativ kann vorgesehen sein, dass die Feststellbremsvorrichtung ein Air Processing Module mit einer elektronisch gesteuerten Luftaufbereitungseinheit aufweist, wobei an die Luftaufbereitungseinheit ein elektronisch geregeltes Parkbremsmodul angeflanscht ist.

Diese Ausgestaltung lässt ich noch dadurch ergänzen, dass vorgesehen ist, dass das Anhängersteuerventil als Anhängerbremsmodul ausgebildet ist, an welches die Ventileinrichtung in modularer Bauweise anflanschbar ist.

Besonders vorteilhaft ist eine Weiterbildung der Erfindung, die sich dadurch auszeichnet, dass die Ventileinrichtung im Fahrerhaus des Zugfahrzeugs angeordnet ist.

Schließlich kann die Erfindung noch dadurch ergänzt werden, dass die Ventileinrichtung als Magnetventil ausgebildet ist.

Weitere Vorteile und Ausgestaltungen der Erfindung ergeben sich aus den Unteransprüchen und der nachfolgenden Beschreibung eines Ausführungsbeispiels anhand der Zeichnung. Die Zeichnung zeigt:
- Fig. 1:: ein pneumatisches Schaltbild eines ersten Ausführungsbeispiels einer Feststellbremsvorrichtung gemäß der Erfindung,
- Fig. 2:: ein pneumatisches Schaltbild eines zweiten Ausführungsbeispiels einer erfindungsgemäßen Feststellbremsvorrichtung,
- Fig. 3:: eine Ventileinrichtung aus Fig. 1 und 2 in Längsschnitt,
- Fig. 4:: ein Betätigungsschema der Ventileinrichtung aus Fig. 3 und
- Fig. 5:: eine schematische Seitenansicht eines Nutzfahrzeugs mit einer erfindungsgemäßen Feststellbremsvorrichtung.

In den nachfolgenden Figuren sind die Bestandteile der erfindungsgemäßen Feststellbremsvorrichtung mit normalen Bezugsziffern versehen, während die pneumatischen Anschlüsse oder Leitungen entsprechend der DIN/ISO 6786 gekennzeichnet sind, in Abweichung zur DIN/ISO 8786 aber jeweils mit einem "L" als Präfix zur besseren Abgrenzung zu den Bezugszeichen gekennzeichnet sind. Beispielsweise entspricht der Anschluss "L21" also dem Anschluss 21 der DIN/ISO 6786.

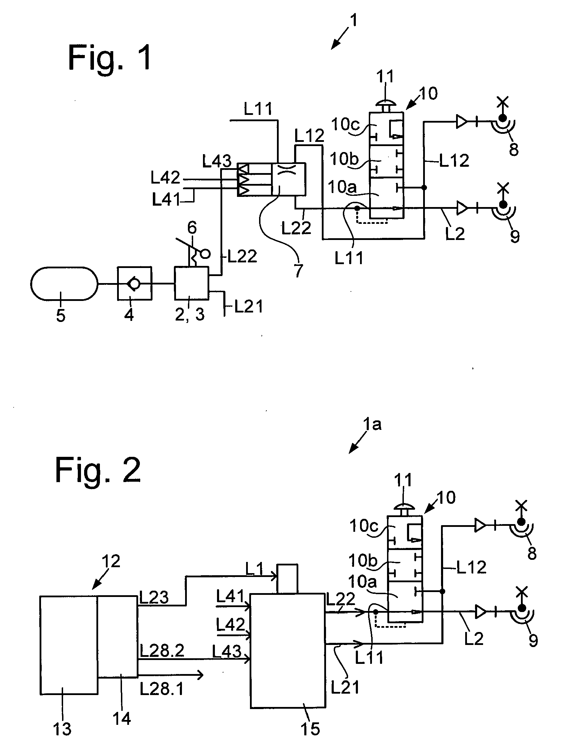

In Fig. 1 ist ein erstes Ausführungsbeispiel einer Feststellbremsvorrichtung 1 einer pneumatischen Bremsanlage eines als Zugfahrzeug ausgebildeten Nutzfahrzeugs dargestellt, wobei nur die wesentlichen Bestandteile der Feststellbremsvorrichtung dargestellt sind, während die weiteren, üblichen Bestandteile einer pneumatischen Bremsanlage in Fig. 1 nicht gezeigt sind. Die Feststellbremsvorrichtung 1 weist eine Feststellbremsbetätigungseinrichtung 2 auf, welche als Handbremsventil 3 ausgebildet ist, ist über ein Rückschlagventil 4 an einem Druckluftvorratsbehälter 5 angeschlossen. Eine Leitung L21 führt zu einer nicht dargestellten Feststellbremseinrichtung des Zugfahrzeugs. Wird ein Hebel 6 des Handbremsventils 3 betätigt, gelangt Druckluft aus dem Druckluftvorratsbehälter über den Anschluss L21 zur Feststellbremse des Zugfahrzeugs und über einen Bremsdruckanschluss L22 zu einem Bremsdruck- oder Steuerdruckanschluss L43 eines nur schematisch dargestellten, an sich bekannten Anhängersteuerventils 7. Das Anhängersteuerventil 7 weist weitere Steueranschlüsse L11, L42 und L41 auf, auf die es aber nachfolgend nicht ankommt. Durch das Anhängersteuerventil 7 wird ein Vorratsdruck über den Vorratsdruckanschluss L12 zu einem Vorrats-Kupplungskopf 8 durchgeschleift; der Kupplungskopf "Vorrat" 8 ist im angekoppelten Fahrzeug eines Anhängerfahrzeuges mit einer entsprechenden Steuerleitung des Anhängerfahrzeuges verbunden und führt Vorratsdruck der Bremsanlage des Anhängerfahrzeuges zu.

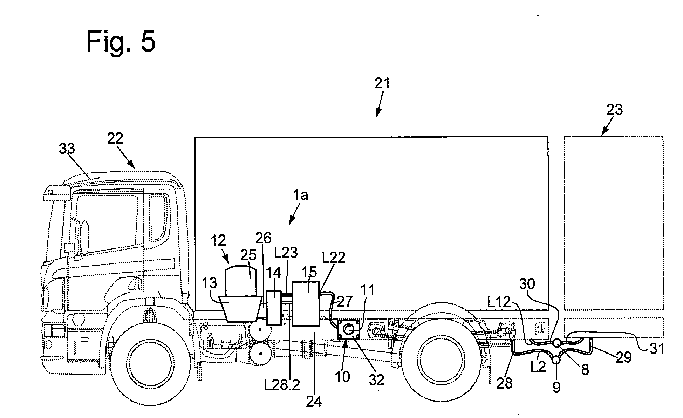

Ein ausgesteuerter Bremsdruck verlässt das Anhängersteuerventil 7 über den Bremsdruckanschluss L22 und gelangt zu einem Kupplungskopf "Bremse" bzw. einem Brems-Kupplungskopf 9. Bei für den kontinentaleuropäischen Markt bestimmten Bremsanlagen würde eine Betätigung der Feststellbremsbetätigungseinrichtung 2 bewirken, dass auch ein Bremsdruck über den Brems-Kupplungskopf 9 zur entsprechenden Bremsleitung des Anhängerfahrzeuges durchgesteuert werden würde, wodurch die Bremse des Anhängerfahrzeuges betätigt werden würde. Bei einer Feststellbremsanlage 1 für den nordeuropäischen, insbesondere skandinavischen Markt, wird der ausgesteuerte Bremsdruck jedoch nicht zur Bremse des Anhängerfahrzeuges durchgesteuert, so dass die Bremse des Anhängerfahrzeuges unbetätigt bleibt. Um nun ein Wegrutschen des Anhängerfahrzeuges beim Be- und Entladen des Anhängerfahrzeuges im angekoppelten Zustand am Zugfahrzeug zu verhindern, ist zwischen dem Bremsdruckanschluss L22 am Anhängersteuerventil 7 und dem Bremsdruckanschluss L2 des Brems-Kupplungskopfs 9 eine Ventileinrichtung 10 angeordnet. Diese Ventileinrichtung 10 ist am Zugfahrzeug angeordnet, was anhand von Fig. 5 noch näher erläutert werden wird.

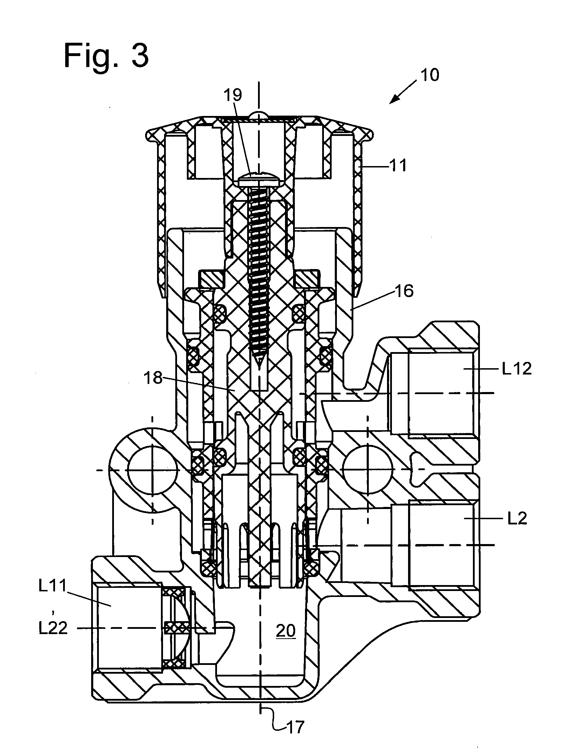

Die Ventileinrichtung 10, deren konstruktiver Aufbau im Zusammenhang mit Fig. 3 näher erläutert werden wird, ist als 3/3-Wegeventil ausgebildet und weist einen Betätigungsknopf 11 auf. Im normalen Zustand einer unteren Stellung 10a, welcher in Fig. 1 dargestellt ist, besteht eine Verbindung vom Bremsdruckanschluss L22 zum Bremsdruckanschluss L2 des Brems-Kupplungskopfs 9, so dass auch die Bremszylinder der Feststellbremsanlage des Anhängerfahrzeuges belüftet und dessen Bremse somit unwirksam ist. Wird der Knopf 11 niedergedrückt, wird das Ventil von der unteren Stellung 10a über eine mittlere Stellung 10b in eine obere Stellung 10c verschoben, wodurch die Anschlüsse L22 des Anhängerbremsventils 7 und der Anschluss L2 des Brems-Kupplungskopfs 9 getrennt und statt dessen der Vorratsanschluss L12 mit dem Anschluss L2 des Brems-Kupplungskopfs 9 verbunden werden, wodurch auch die Bremsen des Anhängerfahrzeuges aktiviert werden.

Startet der Fahrer anschließend nach erfolgreicher Be- bzw. Entladung das Zugfahrzeug und aktiviert die Bremsanlage des Fahrzeuges zum ersten Mal, gelangt ein Mindestdruck von etwa 2,5 bar über den Eingangsanschluss L11 in die Ventileinrichtung 10, was dazu führt, dass der Ventilkolben der Ventileinrichtung 10 nach oben gedrückt und der Anschluss L22 mit dem Anschluss L2 des Brems-Kupplungskopfs 9 erneut verbunden wird, was wiederum dazu führt, dass die Bremseinrichtung des Anhängerfahrzeuges gelöst wird.

In Fig. 2 ist ein zweites Ausführungsbeispiel einer Feststellbremsvorrichtung 1 a dargestellt, bei welcher für gleiche Teile die gleichen Bezugszeichen und Anschluss-Kennungen verwendet werden. Die Feststellbremsvorrichtung 1 a gemäß Fig. 2 unterscheidet sich von der Feststellbremsvorrichtung 1 gemäß Fig. 1 dadurch, dass hier kein mechanisch-pneumatisches Feststellbremsvorrichtung vorhanden ist. Bei der Feststellbremsvorrichtung 1 a gemäß Fig. 2 ist stattdessen ein sogenanntes "Air Processing Module 12" oder APM 12 vorhanden. Dieses besteht aus einer elektronisch gesteuerten Luftaufbereitungseinheit 13, welche durch einen mit dem Motor des Zugfahrzeugs verbundenen Kompressor erzeugte Druckluft elektronisch gesteuert reinigt und einem in Fig. 2 nicht dargestellten Vorratsbehälter zuführt. An die Luftaufbereitungseinheit 13 ist ein elektronisch geregeltes Parkbremsmodul 14 angeflanscht. Dieses wird durch einen in der Fahrerkabine angeordneten Schalter zur Aktivierung der Feststellbremse aktiviert. Nach Aktivieren des Parkbremsmoduls 14 wird Luftdruck über einen Anschluss L28.1 an nicht dargestellte Feststellbremsen des Zugfahrzeuges und über Anschlüsse L28.2 und L23 an Anschlüsse L1 und L43 eines nur schematisch angedeuteten Anhängerbremsmoduls 15 zugeführt. Dieses übernimmt die Funktion des Anhängersteuerventils 7 aus Fig. 1 und kann dabei wie dieses aufgebaut sein. Es liegt aber auch im Rahmen der Erfindung, dass das Anhängerbremsmodul 15 weitere Funktionen erfüllt und mit einer selbstständigen Steuerlogik versehen ist, wobei es auch möglich ist, das Anhängerbremsmodul 15 an die Luftaufbereitungseinheit 13 oder an das Parkbremsmodul 14 anzuflanschen, so dass sich in diesem Fall eine bauliche Einheit aus Luftaufbereitungseinheit 13, Parkbremsmodul 14 und Anhängerbremsmodul 15 ergibt.

Die weiteren Bauteile der Feststellbremsvorrichtung 1a gemäß Fig. 2 entsprechen derjenigen aus Fig. 1, was insbesondere in Hinblick auf die Ventileinrichtung 10 gilt. Hierbei kann die Ventileinrichtung 10 in Abweichung der Darstellung gemäß den Fig. 1 und 2 auch als 2/3-Wegeventil ausgebildet sein. In diesem Fall würde die mittlere Stellung 10b entfallen, bei welcher alle drei Anschlüsse L11, L12, L2 voneinander getrennt sind.

In Fig. 3 ist die Ventileinrichtung 10 der Figuren 1 und 2 im Längsschnitt dargestellt. Die Ventileinrichtung 10 entspricht in baulicher Hinsicht einem Löseventil bekannten Ventil, welches von der Firma WABCO unter der Teile-Nummer 963 006 001 0 vertrieben wird. Wie zuvor schon beschrieben, dient die Ventileinrichtung 10 erfindungsgemäß aber nicht als Löseventil, sondern als Feststellventil, da nach Betätigen, das heißt Niederdrücken, des Betätigungsknopfs 11 zunächst die Anschlüsse L11, L22 und L2 voneinander getrennt werden - was der mittleren Stellung 10b der Fig. 1 und 2 entspricht - um anschließend, d. h. beim Erreichen der oberen Stellung 10c die Anschlüsse L2 und L12 miteinander verbunden werden, was zur Betätigung der Bremseinrichtung des Anhängerfahrzeuges führt.

Die Ventileinrichtung 10 weist ein Gehäuse 16 auf, entlang dessen Längsachse 17 ein Ventilkolben 18 verschieblich angeordnet ist. Der Ventilkolben 18 ist mittels einer Schraube 19 mit dem Betätigungsknopf 11 verbunden. Bei der in Fig. 3 dargestellten Situation befindet sich der Ventilkolben 18 in seiner maximal ausgezogenen, das heißt axial oberen Lage, was der unteren Stellung 10a der Fig. 1 und 2 entspricht. In dieser Lage ist der Geräteanschluss L11 bzw. L22 mit dem Bremsdruckanschluss L2 verbunden. Wird der Knopf 11 und damit der Betätigungskolben 18 niedergedrückt und damit der Ventilkolben 18 nach unten in Richtung des Anschlusses L11 bzw. L22 gedrückt, wird der Bremsdruckanschluss L2 mit dem Vorratsanschluss L12 verbunden. Dies bewirkt, dass die Bremse des Anhängerfahrzeuges aktiviert wird. Das Anhängerfahrzeug ist dann gebremst. Wird nach erfolgtem Be- bzw. Entladen das Zugfahrzeug erneut gestartet, gelangt bereits ein geringer Anfangsdruck von etwa 2,5 bar über die Anschlüsse L11 bzw. L22 in eine Steuerkammer 20. Dieser Druck reicht bereits aus, den Ventilkolben 18 nach oben zu drücken, was zur Folge hat, der Vorratsanschluss L12 vom Bremsdruckanschluss L2 getrennt wird, wodurch ein normales Bremsbetätigen bzw. Bremslösen wieder ermöglicht wird.

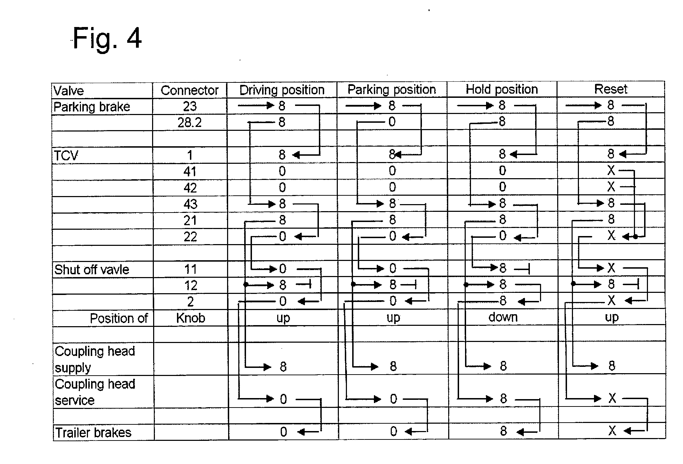

In Fig. 4 ist schematisch der Druckverlauf in den verschiedenen Schaltstellungen bzw. in den verschiedenen Fahrsituationen dargestellt. Hierbei bedeuten:
Valve: Ventil
Parking Brake: Parkbremse
TCV: Trailer Control Valve oder Anhängersteuerventil
Shut-off Valve: Absperrventil
Position of Knob: Stellung des Betätigungsknopfes 11
Up/Down: Oben/Unten
Coupling Head Supply: Vorratsdruck am Vorrats-Kupplungskopf 8
Coupling Head Service: Bremsdruck am Brems-Kupplungskopf 9
Trailer Brakes: Feststellbremse des Anhängerfahrzeuges
Connector: Anschluss
Driving Position: Fahrstellung
Parking Position: Parkstellung
Hold Position: Feststellbremssituation
Reset: Lösestellung

Während die jeweils in den Spalten angegebenen Werte Null bzw. 8 den Druck in bar darstellen, bedeutet ein "X" der Minimaldruck, der nötig ist, um den Ventilkolben 18 der Ventileinrichtung in seine Lösestellung, also nach oben, zu bringen. Im Regelfall beträgt dieser Minimalwert ca. 2,5 bar.

In Fig. 5 ist schematisch ein Nutzfahrzeug 21 von der Seite dargestellt. Das Nutzfahrzeug 21 besteht aus einer Kombination eines Zugfahrzeugs 22 und eines Anhängerfahrzeuges 23, wobei das Anhängerfahrzeug 23 nur ganz schematisch dargestellt ist. Das Anhängerfahrzeug 23 ist auf geeignete, nicht dargestellte Weise mechanisch an das Zugfahrzeug 22 angekoppelt. Bei dem Anhängerfahrzeug 23 kann es sich auch um einen Sattelauflieger handeln, der auf einem Rahmen 24 des Zugfahrzeugs aufliegt. Schematisch dargestellt ist, dass die Feststellbremsvorrichtung 1a aus Fig. 2 am Rahmen 24 des Zugfahrzeugs angebracht ist. Angedeutet ist in Fig. 5 insbesondere das Air Processing Module 12, welches eine Luftaufbereitungseinheit 13 mit aufgesetzter Filterkartusche 25 aufweist. Über einen Flansch 26 ist das Parkbremsmodul 14 an die Luftaufbereitungseinheit 13 angeflanscht. Das Parkbremsmodul 14 ist über den Anschlüssen L23 und L28.2 zugeordneten Leitungen mit dem Anhängerbremsmodul 15 verbunden. Der Anschluss L22 des Anhängerbremsmoduls 15 ist über eine Anschlussleitung 27 pneumatisch mit dem in Fig. 5 nicht dargestellten Eingangsanschluss L11 der Ventileinrichtung 10 verbunden. Die Ventileinrichtung 10 ist wiederum über eine nicht dargestellte Anschlussleitung mit einer Bremsleitung 28 mit dem Bremsdruckanschluss L2 des Brems-Kupplungskopfs 9 verbunden, welcher wiederum über eine Bremsleitung 29 mit der nicht dargestellten Bremsanlage des Anhängerfahrzeuges 23 verbunden ist. Ferner ist die Ventileinrichtung 10 über eine nicht dargestellte Anschlussleitung mit einer Vorratsleitung 30 mit dem Vorratsanschluss L12 des Vorrats-Kupplungskopfs 8 verbunden, welcher über eine Vorratsleitung 31 mit der nicht dargestellten Bremsanlage des Anhängerfahrzeuges 23 verbunden ist.

Wie in Fig. 5 insbesondere zu erkennen ist, ist die Ventileinrichtung 10 mit ihrem Betätigungsknopf 11 quasi liegend über einen Befestigungsflansch 32 am Rahmen 24 des Zugfahrzeugs 22 angeschraubt. Die dargestellte Einbauposition am Zugfahrzeug 22 ermöglicht es dem Fahrer, bequem vor dem Be- und Entladen den Betätigungskopf 11 zu drücken, wodurch die Feststellbremse des Anhängerfahrzeuges 23 betätigt wird.

In Abweichung von der Darstellung nach Fig. 5 ist es jedoch auch möglich, die Ventileinrichtung 10 an anderer Stelle des Zugfahrzeuges anzubringen, beispielsweise ist es möglich, die Ventileinrichtung 10 in modularer Bauweise am Anhängerbremsmodul 15 anzuflanschen. Ebenso denkbar ist eine Anbringung der Ventileinrichtung im Fahrerhaus 33 des Zugfahrzeugs 22. Aus Sicherheitsgründen wird jedoch eine Anbringung außen am Zugfahrzeug 22 bevorzugt werden.

Im Rahmen der Erfindung liegt es auch, anstelle des händisch zu bedienenden Bestätigungsknopfes 11 einen motorischen Stellantrieb mit dem Ventilkolben 18 zu verbinden. Dies hätte den Vorteil, dass die Ventileinrichtung 10 elektrisch betätigt werden könnte, beispielsweise durch einfaches Drücken eines am oder im Zugfahrzeug 22 angeordneten Tastschalters. Hierbei ist es auch denkbar, den motorischen Stellantrieb mit einer Fernbedienung zu versehen, wobei die Fernbedienung kabelgebunden oder kabellos ausgeführt sein kann. Im letzteren Fall kann die Fernbedienung als spezielles Software-Programm oder "App" eines Smartphones ausgebildet sein. Mittels einer wie auch immer gearteten Fernbedienung ließen sich weitere Funktionen des Nutzfahrzeugs 21 beim Be- und Entladen steuern, wie Heben und Senken des Anhängerfahrzeuges, das Heben und Senken einer Schleppachse, und dergleichen.

Ebenso ist es möglich, die Ventileinrichtung 10 als Magnetventil auszugestalten. In diesem Fall würde die Ansteuerung der Ventileinrichtung rein elektrisch bzw. elektronisch erfolgen. Auch in diesem Falle bestünde die Möglichkeit, die als Magnetventil ausgebildete Ventileinrichtung 10 mittels einer Fernbedienung zu schalten, welche wie oben dargestellt ausgebildet sein kann.

### Bezugszeichenliste (Teil der Beschreibung)

- 1: Feststellbremsvorrichtung
- 1a: Feststellbremsvorrichtung
- 2: Feststellbremsbetätigungseinrichtung
- 3: Handbremsventil
- 4: Rückschlagventil
- 5: Druckluft-Vorratsbehälter
- 6: Hebel
- 7: Anhängersteuerventil
- 8: Vorrats-Kupplungskopf
- 9: Brems-Kupplungskopf
- 10: Ventileinrichtung
- 10a: untere Stellung der Ventileinrichtung 10
- 10b: mittlere Stellung der Ventileinrichtung 10
- 10c: obere Stellung der Ventileinrichtung 10
- 11: Betätigungsknopf
- 12: Air Processing Module
- 13: Luftaufbereitungseinheit
- 14: Parkbremsmodul
- 15: Anhängerbremsmodul
- 16: Gehäuse
- 17: Längsachse
- 18: Ventilkolben
- 19: Schraube
- 20: Steuerkammer
- 21: Nutzfahrzeug
- 22: Zugfahrzeug
- 23: Anhängerfahrzeug
- 24: Rahmen
- 25: Filterkartusche
- 26: Flansch
- 27: Anschlussleitung
- 28: Bremsleitung
- 29: Bremsleitung
- 30: Vorratsleitung
- 31: Vorratsleitung
- 32: Befestigungsflansch
- 33: Fahrerhaus

- L1: Bremsdruckanschluss
- L2: Bremsdruckanschluss
- L11: Eingangsanschluss
- L12: Vorratsdruckanschluss
- L21: Vorratsdruckanschluss
- L22: Bremsdruckanschluss
- L23: Bremsdruckanschluss
- L8.2: Bremsdruckanschluss
- L43: Bremsdruckanschluss

## Patentansprüche

1. Feststellbremsvorrichtung (1; 1a) einer pneumatischen Bremsanlage eines Nutzfahrzeugs (21), bei welchem an ein Zugfahrzeug (22) mit eigener pneumatischer Bremsanlage ein Anhängerfahrzeug (23) mit eigener pneumatischer Bremsanlage mit wenigstens einer Bremse ankoppelbar ist, mit einer am Zugfahrzeug (22) angeordneten Feststellbremsbetätigungseinrichtung (2, 3; 12), durch welche wenigstens eine Feststellbremse wenigstens des Zugfahrzeugs (22) betätigbar ist, und mit einem am Zugfahrzeug (22) angeordneten, mit der Feststellbremstätigungseinrichtung (2, 3; 12) über gemeinsame Bremsdruckanschlüsse (L22, L43; L28.2, L43, L23, L1) verbundenen Anhängersteuerventil (7; 15), durch welches pneumatischer Vorratsdruck über einen Vorratsdruckanschluss (L12) einem am Zugfahrzeug (22) angeordneten Vorrats-Kupplungskopf (8) und einem Brems-Kupplungskopf (9) zuführbar ist, wobei durch die Kupplungsköpfe (8, 9) die pneumatische Bremsanlage des Anhängerfahrzeugs (23) mit der Bremsanlage des Zugfahrzeugs (22) verbindbar ist, **dadurch gekennzeichnet, dass** zwischen dem am Zugfahrzeug (22) angeordneten Anhängersteuerventil (7, 15) und den am Zugfahrzeug (22) angeordneten Kupplungsköpfen (8, 9) eine am Zugfahrzeug (22) befestigte Ventileinrichtung (10) angeordnet ist, durch welche ein pneumatischer Anschluss (L2) des Brems-Kupplungskopfs (9) entweder mit einem Bremsdruckanschluss (L22) des Anhängersteuerventils (7; 15) oder mit einem Vorratsdruckanschluss (L12) des Anhängersteuerventils (7; 15) und des Vorrats-Kupplungskopfs (8) verbindbar ist.

2. Feststellbremsvorrichtung nach Anspruch 1, **dadurch gekennzeichnet, dass** die Ventileinrichtung (10) als 2/3-Wegeventil ausgebildet ist, wobei in einer unteren Stellung (10a) der Ventileinrichtung (10) eine Verbindung des Bremsdruckanschlusses (L22) des Anhängersteuerventils (7, 15) über einen Eingangsanschluss (L11) der Ventileinrichtung (10) mit dem Bremsdruckanschluss (L2) des Brems-Kupplungskopfs (9) besteht, und wobei in einer oberen Stellung (10c) der Ventileinrichtung (10) eine Verbindung des Vorratsdruckanschlusses (L21) des Anhängersteuerventils (7, 15) und des Vorratsdruckanschlusses (L12) des Vorrats-Kupplungskopfs (8) mit dem Bremsdruckanschluss (L2) des Brems-Kupplungskopfs (9) besteht.

3. Feststellbremsvorrichtung nach Anspruch 1, **dadurch gekennzeichnet, dass** die Ventileinrichtung (10) als 3/3-Wegeventil ausgebildet ist, wobei in einer unteren Stellung (10a) der Ventileinrichtung (10) eine Verbindung des Bremsdruckanschlusses (L22) des Anhängersteuerventils (7, 15) über einen Eingangsanschluss (L11) der Ventileinrichtung (10) mit dem Bremsdruckanschluss (L2) des Brems-Kupplungskopfs (9) besteht, und wobei in einer oberen Stellung (10c) der Ventileinrichtung (10) eine Verbindung des Vorratsdruckanschlusses (L21) des Anhängersteuerventils (7, 15) und des Vorratsdruckanschlusses (L12) des Vorrats-Kupplungskopfs (8) mit dem Bremsdruckanschluss (L2) des Brems-Kupplungskopfs (9) besteht, und wobei in einer mittleren Stellung (10b) zwischen unterer Stellung (10a) und der oberen Stellung (10c) der Ventileinrichtung (10) sowohl der Bremsdruckanschluss (L2) des Brems-Kupplungskopfs (9), als auch der Vorratsdruckanschlusses (L12) des Vorrats-Kupplungskopfs (8) abgesperrt sind.

4. Feststellbremsvorrichtung wenigstens nach Anspruch 1, **dadurch gekennzeichnet, dass** die Ventileinrichtung (10) ein Gehäuse (16) aufweist, entlang dessen Längsachse (17) ein Ventilkolben (18) verschieblich angeordnet ist, welcher mit einem Betätigungsknopf (11) verbunden ist.

5. Feststellbremsvorrichtung nach Anspruch 4, **dadurch gekennzeichnet, dass** die Ventileinrichtung (10) mit ihrem Betätigungsknopf (11) mittels eines Befestigungsflansches (32) außen am Rahmen (24) des Zugfahrzeugs (22) befestigt ist.

6. Feststellbremsvorrichtung wenigstens nach einem der Ansprüche 1 - 5, **dadurch gekennzeichnet, dass** die Feststellbremsvorrichtung (1) eine als Handbremsventil (3) ausgebildete Feststellbremsbetätigungseinrichtung (2) aufweist, welche über ein Rückschlagventil (4) an einem Druckluftvorratsbehälter (5) angeschlossen ist.

7. Feststellbremsvorrichtung wenigstens nach einem der Ansprüche 1 - 5, **dadurch gekennzeichnet, dass** die Feststellbremsvorrichtung (1 a) ein Air Processing Module (12) mit einer elektronisch gesteuerten Luftaufbereitungseinheit (13) aufweist, wobei an die Luftaufbereitungseinheit (13) ein elektronisch geregeltes Parkbremsmodul (14) angeflanscht ist.

8. Feststellbremsvorrichtung nach Anspruch 6, **dadurch gekennzeichnet, dass** das Anhängersteuerventil (15) als Anhängerbremsmodul (15) ausgebildet ist, an welches die Ventileinrichtung (10) in modularer Bauweise anflanschbar ist.

9. Feststellbremsvorrichtung wenigstens nach Anspruch 1, **dadurch gekennzeichnet, dass** die Ventileinrichtung (10) im Fahrerhaus (33) des Zugfahrzeugs (22) angeordnet ist.

10. Feststellbremsvorrichtung wenigstens nach Anspruch 1, **dadurch gekennzeichnet, dass** die Ventileinrichtung (10) als Magnetventil ausgebildet ist.

## Claims

1. Parking brake apparatus (1; 1a) of a pneumatic brake system of a commercial vehicle (21), in which a trailer vehicle (23) with a dedicated pneumatic brake system with at least one brake can be coupled to a traction vehicle (22) with a dedicated pneumatic brake system, having a parking brake actuating device (2, 3; 12) which is arranged on the traction vehicle (22) and by way of which at least one parking brake at least of the traction vehicle (22) can be actuated, and having a trailer control valve (7; 15) which is connected to the parking brake actuating device (2, 3; 12) by common brake pressure connectors (L22, L43; L28.2, L43, L23, L1) and is arranged on the traction device (22) and by way of which pneumatic supply pressure can be fed via a supply pressure connector (L12) to a supply coupling head (8) which is arranged on the traction vehicle (22) and to a brake coupling head (9), it being possible for the pneumatic brake system of the trailer vehicle (23) to be connected to the brake system of the traction vehicle (22) by way of the coupling heads (8, 9), **characterized in that** a valve device (10) which is fastened to the traction vehicle (22) is arranged between the trailer control valve (7, 15) which is arranged on the traction vehicle (22) and the coupling heads (8, 9) which are arranged on the traction vehicle (22), by way of which valve device (10) a pneumatic connector (L2) of the brake coupling head (9) can be connected either to a brake pressure connector (L22) of the trailer control valve (7; 15) or to a supply pressure connector (L12) of the trailer control valve (7; 15) and the storage coupling head (8).

2. Parking brake apparatus according to Claim 1, **characterized in that** the valve device (10) is configured as a 2/3-way valve, a connection of the brake pressure connector (L22) of the trailer control valve (7, 15) via an input connector (L11) of the valve device (10) to the brake pressure connector (L2) of the brake coupling head (9) existing in a lower position (10a) of the valve device (10), and a connection of the supply pressure connector (L21) of the trailer control valve (7, 15) and the supply pressure connector (L12) of the supply coupling head (8) to the brake pressure connector (L2) of the brake coupling head (9) existing in an upper position (10c) of the valve device (10).

3. Parking brake apparatus according to Claim 1, **characterized in that** the valve device (10) is configured as a 3/3-way valve, a connection of the brake pressure connector (L22) of the trailer control valve (7, 15) via an input connector (L11) of the valve device (10) to the brake pressure connector (L2) of the brake coupling head (9) existing in a lower position (10a) of the valve device (10), and a connection of the supply pressure connector (L21) of the trailer control valve (7, 15) and the supply pressure connector (L12) of the supply coupling head (8) to the brake pressure connector (L2) of the brake coupling head (9) existing in an upper position (10c) of the valve device (10), and both the brake pressure connector (L2) of the brake coupling head (9) and the supply pressure connector (L12) of the supply coupling head (8) being shut off in a middle position (10b) between the lower position (10a) and the upper position (10c) of the valve device (10).

4. Parking brake apparatus at least according to Claim 1, **characterized in that** the valve device (10) has a housing (16), along the longitudinal axis (17) of which a valve piston (18) is arranged displaceably, which valve piston (18) is connected to an actuating button (11).

5. Parking brake apparatus according to Claim 4, **characterized in that** the valve device (10) is fastened with its actuating button (11) on the outside to the frame (24) of the traction vehicle (22) by means of a fastening flange (32).

6. Parking brake apparatus at least according to one of Claims 1-5, **characterized in that** the parking brake apparatus (1) has a parking brake actuating device (2) which is configured as a hand brake valve (3) and is connected via a check valve (4) to a compressed air reservoir (5).

7. Parking brake apparatus at least according to one of Claims 1-5, **characterized in that** the parking brake apparatus (1a) has an air processing module (12) with an electronically controlled air treatment unit (13), an electronically regulated parking brake module (14) being flange-connected to the air treatment unit (13).

8. Parking brake apparatus according to Claim 6, **characterized in that** the trailer control valve (15) is configured as a trailer brake module (15), to which the valve device (10) can be flange-connected in a modular construction.

9. Parking brake apparatus at least according to Claim 1, **characterized in that** the valve device (10) is arranged in the driver's cab (33) of the traction vehicle (22).

10. Parking brake apparatus at least according to Claim 1, **characterized in that** the valve device (10) is configured as a solenoid valve.

## Revendications

1. Dispositif de frein de stationnement (1 ; 1a) d'une installation de freinage pneumatique d'un véhicule utilitaire (21), dans lequel un véhicule remorque (23) avec sa propre installation de freinage pneumatique comprenant au moins un frein peut être accouplé à un véhicule tracteur (22) ayant sa propre installation de freinage pneumatique, comprenant un dispositif d'actionnement du frein de stationnement (2, 3 ; 12) disposé sur le véhicule tracteur (22), par le biais duquel au moins un frein de stationnement d'au moins le véhicule tracteur (22) peut être actionné, et comprenant une soupape de commande de remorque (7 ; 15) disposée sur le véhicule tracteur (22) et connectée au dispositif d'actionnement du frein de stationnement (2, 3 ; 12) par le biais de raccords de pression de freinage communs (L22, L43 ; L28.2, L43, L23, L1), par le biais de laquelle soupape une pression de stockage pneumatique peut être acheminée par le biais d'un raccord de pression de stockage (L12) à une tête d'accouplement de stockage (8) disposée sur le véhicule tracteur (22) et à une tête d'accouplement de freinage (9), l'installation de freinage pneumatique du véhicule remorque (23) pouvant être connectée à l'installation de freinage du véhicule tracteur (22) par les têtes d'accouplement (8, 9), **caractérisé en ce que** qu'entre la soupape de commande de remorque (7, 15) disposée sur le véhicule tracteur (22) et les têtes d'accouplement (8, 9) disposées sur le véhicule tracteur (22) est disposé un dispositif de soupape (10) fixé au véhicule tracteur (22), par le biais duquel un raccord pneumatique (L2) de la tête d'accouplement de freinage (9) peut être connecté soit à un raccord de pression de freinage (L22) de la soupape de commande de remorque (7 ; 15) soit à un raccord de pression de stockage (L12) de la soupape de commande de remorque (7 ; 15) et de la tête d'accouplement de stockage (8).

2. Dispositif de frein de stationnement selon la revendication 1, **caractérisé en ce que** le dispositif de soupape (10) est réalisé sous forme de soupape à 2/3 voies, une connexion du raccord de pression de freinage (L22) de la soupape de commande de remorque (7, 15), par le biais d'un raccord d'entrée (L11) du dispositif de soupape (10), au raccord de pression de freinage (L2) de la tête d'accouplement de freinage (9) existant dans une position inférieure (10a) du dispositif de soupape (10), et une connexion du raccord de pression de stockage (L21) de la soupape de commande de remorque (7, 15) et du raccord de pression de stockage (L12) de la tête d'accouplement de stockage (8) au raccord de pression de freinage (L2) de la tête d'accouplement de freinage (9) existant dans une position supérieure (10c) du dispositif de soupape (10).

3. Dispositif de frein de stationnement selon la revendication 1, **caractérisé en ce que** le dispositif de soupape (10) est réalisé sous forme de soupape à 3/3 voies, une connexion du raccord de pression de freinage (L22) de la soupape de commande de remorque (7, 15) par le biais d'un raccord d'entrée (L11) du dispositif de soupape (10) au raccord de pression de freinage (L2) de la tête d'accouplement de freinage (9) existant dans une position inférieure (10a) du dispositif de soupape (10), et une connexion du raccord de pression de stockage (L21) de la soupape de commande de remorque (7, 15) et du raccord de pression de stockage (L12) de la tête d'accouplement de stockage (8) au raccord de pression de freinage (L2) de la tête d'accouplement de freinage (9) existant dans une position supérieure (10c) du dispositif de soupape (10), et le raccord de pression de freinage (L2) de la tête d'accouplement de freinage (9) ainsi que le raccord de pression de stockage (L12) de la tête d'accouplement de stockage (8) étant bloqués dans une position centrale (10b) entre la position inférieure (10a) et la position supérieure (10c) du dispositif de soupape (10).

4. Dispositif de frein de stationnement selon au moins la revendication 1, **caractérisé en ce que** le dispositif de soupape (10) présente un boîtier (16) le long de l'axe longitudinal (17) duquel est disposé de manière déplaçable un piston de soupape (18) qui est connecté à un bouton d'actionnement (11).

5. Dispositif de frein de stationnement selon la revendication 4, **caractérisé en ce que** le dispositif de soupape (10) est fixé avec sa tête d'actionnement (11) au moyen d'une bride de fixation (32) à l'extérieur sur le cadre (24) du véhicule tracteur (22).

6. Dispositif de frein de stationnement selon au moins l'une quelconque des revendications 1 à 5, **caractérisé en ce que** le dispositif de frein de stationnement (1) présente un dispositif d'actionnement de frein de stationnement (2) réalisé sous forme de soupape de freinage manuelle (3) qui est raccordé par le biais d'un clapet antiretour (4) à un réservoir d'air comprimé (5).

7. Dispositif de frein de stationnement selon au moins l'une quelconque des revendications 1 à 5, **caractérisé en ce que** le dispositif de frein de stationnement (1a) présente un module de traitement d'air (12) avec une unité de traitement d'air à commande électronique (13), un module de frein de stationnement à régulation électronique (14) étant bridé sur l'unité de préparation d'air (13).

8. Dispositif de frein de stationnement selon la revendication 6, **caractérisé en ce que** la soupape de commande de remorque (15) est réalisée en tant que module de freinage de remorque (15) sur lequel le dispositif de soupape (10) peut être bridé de manière modulaire.

9. Dispositif de frein de stationnement selon au moins la revendication 1, **caractérisé en ce que** le dispositif de soupape (10) est disposé dans la cabine de conducteur (33) du véhicule tracteur (22).

10. Dispositif de frein de stationnement selon au moins la revendication 1, **caractérisé en ce que** le dispositif de soupape (10) est réalisé sous forme d'électrovanne.
